# FASCICULE DE BREVET EUROPEEN

(11) **EP 0 595 685 B1**
(45) Date de publication et mention de la délivrance du brevet: **25.08.1999**
(21) Numéro de dépôt: 93402563.6
(22) Date de dépôt: 19.10.1993
(51) Int. Cl.: G08G 1/0968

(54) **Procédé et dispositif de guidage d'un véhicule sur un plan de circulation**
Verfahren und Vorrichtung zur Fahrzeugführung auf Verkehrsstrassen
Method and device for vehicle guidance on roads

(30) Priorité: 30.10.1992 FR 9213006
(43) Date de publication de la demande: 04.05.1994
(73) Titulaire: Société Anonyme dite: REGIE NATIONALE DES USINES RENAULT, 92109 Boulogne Billancourt (FR)
(72) Inventeur: Vilge, Pascal, F-92310 Sevres (FR)

(56) Documents cités:
- DE-A- 3 905 493
- DE-A- 4 118 606

## Description

La présente invention se rapporte au domaine technique de l'aide à la navigation des véhicules routiers. Plus précisément, cette invention concerne un procédé et un dispositif de guidage, reposant sur l'exploitation d'un système de localisation embarqué, et sur le repérage du véhicule par rapport à un plan de circulation.

On connaît divers modes de guidage applicables à l'automobile. L'un d'eux consiste à guider le conducteur au moyen d'une flèche d'orientation lui indiquant la direction à vol d'oiseau de sa destination. Ce mode de guidage ne prend malheureusement pas en compte le tracé des routes. Son efficacité est donc très limitée, en dehors des zones désertiques ou rurales.

Conformément à un second mode de guidage connu, l'indication de la direction à suivre peut être associée à une fonction de localisation autonome ou associée à la réception d'informations extérieures, de façon à positionner le véhicule sur le réseau routier.

La localisation d'un véhicule automobile par satellite, en application du système Loran C ou du Global Positionning System (G.P.S), est aujourd'hui d'une précision d'environ 100 m. Cette localisation nécessite la présence de trois satellites, "en vue" du véhicule. Pour pallier aux interruptions de la réception radio, notamment en milieu urbain, il a été proposé de combiner un système de radio-localisation, et un système autonome de navigation, dit de "navigation à l'estime". La publication EP 0061674 propose notamment de combiner un système de navigation embarqué utilisant des capteurs de roue et un compas d'orientation avec un récepteur G.P.S. Selon cette publication, les signaux radio sont exploités, tant qu'ils sont reçus, tandis que la navigation à l'estime prend le relais, lorsque leur réception est interrompue. Pour obtenir un guidage plus efficace en toutes circonstances, la demanderesse a proposé de renoncer à l'utilisation d'un compas, et d'exploiter la chaîne des informations radio, pour recaler en temps réel le cap et la position du véhicule sur chaque point de navigation l'estime. Cette proposition fait notamment l'objet de la demande de brevet FR 9114544 non publiée à ce jour.

Le document DE 3,905,493 divulgue un système de guidage d'un véhicule routier, reposant sur la détermination de la position instantanée du véhicule et sur l'optimisation d'un itinéraire conduisant noeud par noeud à une destination choisie.

D'autres dispositifs de navigation connus, utilisent cependant avec une grande technicité les informations obtenues à l'aide de compas. C'est le cas du dispositif de guidage décrit dans la publication US 4758959. Ce dispositif comporte une unité de filtrage et de calcul très perfectionnée, qui permet de corréler en temps réel les informations de localisation et d'orientation, avec les données cartographiques d'une carte routière numérisée, embarquée dans la mémoire de masse du véhicule. Le calculateur est capable de localiser avec précision le véhicule sur la carte, et d'optimiser un itinéraire routier. Le conducteur reçoit des indications de guidage, sous la forme de consignes du type : "prendre la première route à droite". Les résultats obtenus sont d'une qualité irréprochable, mais la mise en oeuvre d'un tel dispositif implique l'acquisition d'une carte routière digitalisée extrêmement précise et d'un système de localisation permettant de localiser le véhicule rue par rue, donc à moins de 50 m. De plus, il exige un afficheur présentant une bonne résolution graphique, pour que le conducteur puisse réellement exploiter les flèches de guidage.

Dans la perspective d'un élargissement du champ d'application des systèmes de navigation actuellement développés, la présente invention propose un système de localisation et de guidage routier affranchi d'une fonction de localisation très précise et d'une base de données routière exhaustive. Cette invention a pour objet un procédé et un dispositif de guidage pouvant fonctionner avec un système de localisation dont la précision est de l'ordre de 100 m, tel que le système GPS ou le système Loran C. La radio-localisation pourra avantageusement être couplée à la navigation à l'estime, conformément à la demande de brevet FR 91 14544, déposée par la demanderesse, sans toutefois aucun caractère d'obligation. Le but de l'invention est en effet de parvenir à guider efficacement le conducteur en exploitant une unité de traitement et une base de données routière simplifiées.

L'invention concerne un procédé de guidage d'un véhicule routier, selon les revendications 1 à 3.

L'invention concerne également un dispositif pour la mise en oeuvre de ce procédé selon les revendications 4 à 8.

L'invention sera mieux comprise à la lecture de la description suivante d'un mode de réalisation de celle-ci, en liaison avec les dessins annexés, sur lesquels :
- la figure 1 est un schéma fonctionnel simplifié de l'invention, la figure 2 est un exemple de plan de circulation, et d'itinéraire,
- la figure 3 met en évidence la précision du guidage,
- la figure 4 fait apparaître la signalisation routière d'un plan de circulation, et
- les figures 5 A et 5 B présentent le tableau de communication d'un noeud de circulation type.

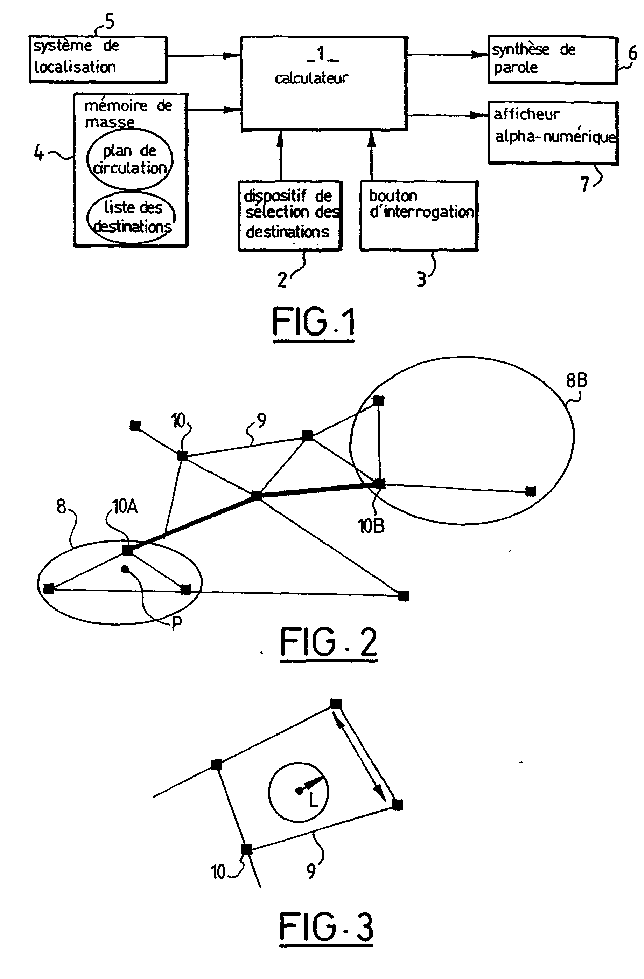

Le calculateur 1 de l'invention, mentionné sur la figure 1, reçoit les ordres de commande, transmis par l'utilisateur, à l'aide d'un organe de sélection des destinations 2, ou d'un bouton d'interrogation 3. Les informations établies par le système de localisation 5 du véhicule parviennent également au calculateur 1. Comme indiqué plus haut, ce système de localisation 5 pourra par exemple reposer sur la combinaison d'un dispositif de navigation à l'estime, et d'un récepteur radio, conformément à la demande de brevet FR 91014544 de la demanderesse, mais on peut également envisager d'utiliser d'autres systèmes de localisation sans sortir du cadre de l'invention. La mémoire de masse 4 du véhicule, également connectée au calculateur 1, comporte une base de données routières intégrant un plan de circulation, et une liste préétablie de destinations 8. Le choix d'une destination 8, dans la liste stockée en mémoire, s'effectue à l'aide d'un dispositif sélection des destinations 2, tel qu'un clavier, un lecteur de codes barres, des boutons, un satellite placé sous le volant etc... Enfin les informations de guidage délivrées par le calculateur 1, sont exploitées par un organe de restitution, tel qu'un système de synthèse de la parole 6 ou un afficheur alpha-numérique 7.

Conformément à l'invention, la liste des destinations regroupe les éléments suivants :
- des agglomérations (communes, hameaux; lieux-dits, cités, etc....)
- des lieux ou des quartiers remarquables de certaines grandes villes (par exemple: place de l'Etoile à Paris ou quartier de la Croix-Rousse à Lyon)
- les gares, les aéroports, les stades, ...

Le réseau routier est donc structuré par des moyens informatiques, en un "plan de circulation", mémorisé dans une base de données routière regroupant les destinations 8, les axes ou branches 9, reliant celles-ci, leurs intersections ou noeuds 10, ainsi que la signalisation routière mentionnant les destinations 8 et les branches 9. En se reportant à la figure 2, on voit qu'une même destination 8 regroupe plusieurs noeuds 10. Les branches 9 sont donc des routes, tandis que les noeuds 10 sont des carrefours.

Dans la base de données, chaque branche 9 est affectée des attributions suivantes :
- un numéro de branche,
- sa nomenclature routière (ex: A 10, N 118, CD 235...)
- le numéro de son noeud d'origine (A),
- le numéro de son noeud d'extrémité (B),
- sa longueur, qui est la longueur du tronçon de route correspondant en kilomètres, et ses deux directions, signalées par des panneaux (de A vers B et de B vers A), et
- ses éventuelles restrictions de circulation (ex: voie à sens unique de A vers B).

La direction signalée d'une branche 9, correspond à la signalisation routière que l'automobiliste rencontre en abordant celle-ci. C'est une variable du type chaîne de caractères, qui correspond la plupart du temps à une destination 8 de la liste mémorisée Le plan de la figure 3 comporte cinq destinations 8, T, U, X, Y, et Z, sept branches 9, numérotées de B1 à B7 et deux noeuds 10, N1, N2. Sur ce plan, on voit qu'en X le conducteur rencontre un panneau indiquant Y par l'autoroute A6, tandis qu'au premier noeud N1, il trouve deux panneaux indiquant respectivement T et Z et qu'au second noeud N2, les deux panneaux existants indiquent respectivement Z et U. Dans la base de données structurant ce plan de circulation, figureront les indications suivantes :
B1 : sens 1 : Y, sens 2 : X,
B2 : sens 1 : Y, sens 2 : X,
B3 : sens 1 : Y, sens 2 : X,
B4 : sens 1 : Z, sens 2 : Y,
B5 : sens 1 : T, sens 2 : X, Y, Z,
B6 : sens 1 : U, sens 2 : X, Y, Z,
B7 : sens 1 : Z, sens 2 : X.

D'une façon générale, dans la base de données, chaque noeud 10 est donc affecté des attributs suivants :
- les coordonnées géographiques du carrefour représenté, exprimées en latitude et longitude, ou de préférence, en coordonnées métriques dans un repère approprié,
- la liste des numéros de branches 9, qui aboutissent à ce noeud 10,
- un tableau de communication entre les branches 9,
- une variable qui indique si le noeud 10 correspond à une destination 8 de la liste mémorisée, et si oui, laquelle.

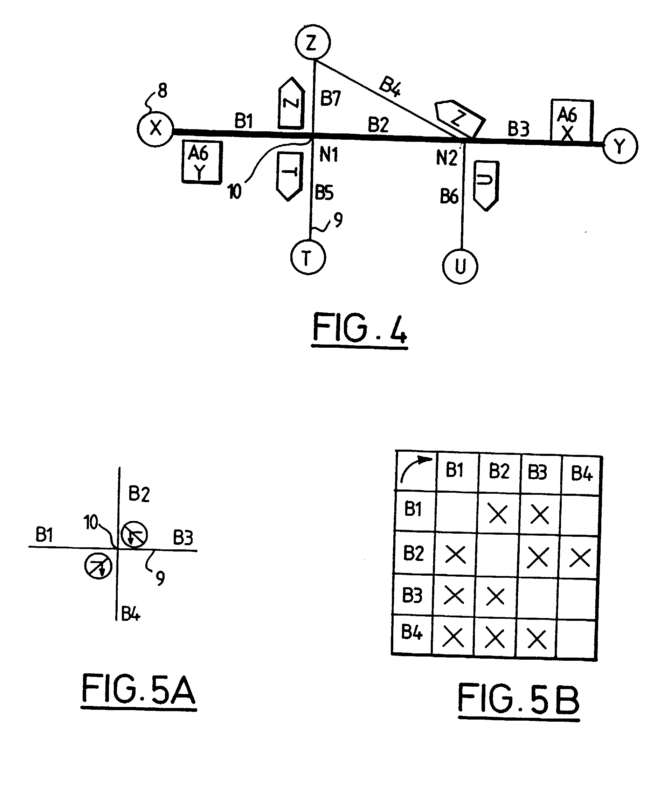

En se reportant au noeud 10 de la figure 5A, et à son tableau de communication (figure 5B), sur lequel on a indiqué par des croix les passages autorisés, on voit qu'il est possible de répertorier de façon rationnelle les informations de circulation relatives à chaque noeud 10 dans une base de données. Celle-ci comportera également la signalisation routière se rapportant au plan de circulation sélectionné.

Lorsque l'utilisateur a entré sa destination 8 dans le dispositif, le calculateur 1, détermine le chemin le plus court conduisant à celle-ci, sur le plan de circulation. Ce chemin relie en réalité le noeud 10A, le plus proche de la position initiale du véhicule, à un noeud 10B, appartenant à sa destination 8. Sur l'exemple de la figure 2, le point P correspond à la position initiale du véhicule. Le noeud 10A est le plus proche, de P. Le trait en caractères gras indique l'itinéraire retenu, et le cercle 8B, la destination choisie. Le noeud 10B, appartenant à la destination 8B, est celui qui a été retenu comme noeud d'arrivée, par le calculateur 1.

Pour rechercher le chemin le plus court, entre le noeud de départ 10A et le noeud d'arrivée 10B, le calculateur 1 exploitera par exemple un algorithme de Dijsktra ou alors un algorithme qui évite une certaine catégorie de routes (par exemple les autoroutes à péage), ou qui minimise les changements de direction.

Le guidage se déroule de la façon suivante. L'utilisateur ayant choisi sa destination 8 dans la liste, à l'aide de sa commande de sélection 2, la position initiale P du véhicule, déterminée par le système de localisation, est comparée à celle des différents noeuds 10, stockés dans la base de données. Si la précision du système de localisation utilisé est de L (L=100m dans le cas d'une localisation par réception G.P.S uniquement), le dispositif cherche un noeud 10A qui correspond à la position initiale P du véhicule, à la précision L près. L'itinéraire est optimisé par la recherche du chemin le plus court conduisant du noeud initial 10A à un noeud d'arrivée 10B, appartenant à la destination 8, choisie. Le dispositif indique au conducteur la direction à vol d'oiseau du premier noeud 10A à rejoindre. Avant qu'il n'aborde le premier noeud 10A, il est averti de la direction signalée, par exemple par un panneau routier, à suivre, à partir de celui-ci. Tout au long du guidage, le calculateur compare la position P du véhicule aux différents noeuds 10 du plan. Chaque fois que le véhicule arrive à une distance L d'un noeud 10, le calculateur 1 indique la direction signalée de la branche 9 à suivre en abordant celui-ci. Le message de guidage est de la forme : "prendre la D 278 en direction de Pontoise". Il peut être produit par voie sonore en utilisant la synthèse de la parole, être présenté sous forme alpha-numérique au conducteur, à proximité du tableau de bord, ou encore être projeté en vision tête haute sur le pare-brise. Une combinaison de ces différents modes de restitution est bien entendu envisageable. A tout instant le conducteur peut interroger le dispositif à l'aide de son bouton d'interrogation 3. Toutefois, il est prévu que le dispositif ne génère un nouveau message que dans le cas où la direction à suivre change. Cette disposition a pour but d'éviter une surabondance de messages transmis au conducteur.

En conclusion, le procédé et le dispositif de guidage de l'invention reposent essentiellement sur une exploitation judicieuse de la signalisation routière existante. Il ne contrarie pas les habitudes des automobilistes. L'utilisation de la synthèse de la parole ou de la projection en vision tête haute évite notamment que ceux-ci détournent les yeux de la route vers un écran de guidage. Quel que soit le mode de restitution adopté, l'émission d'un signal d'avertissement sera utile pour attirer l'attention du conducteur sur l'imminence d'un nouveau message.

La précision du système de localisation peut être relativement médiocre (par exemple moins bonne que 50m), sans que la fiabilité du guidage en soit affectée. En effet, comme le met en évidence la figure 3, il suffit que les mailles du plan de circulation soient supérieures à la précision L du système de localisation 5, pour qu'il n'y ait pas de confusion possible sur la position du véhicule par rapport aux différents noeuds.

Avec un système de radio-localisation utilisant un récepteur G.P.S (L=100m), le plan de circulation pourra aisément contenir tous les itinéraires verts et blancs du réseau routier français. En revanche, l'invention ne permettra pas dans ce cas, de guider les automobilistes jusqu'à une rue particulière. Il faut donc souligner que l'invention ne nécessite, pas la mise en oeuvre d'une base de données routière digitale sophistiquée. De plus, un plan de circulation établi à une date donnée restera valable longtemps, étant donné que toute route conduisant à une ville X restera toujours affectée de la même direction X, même si les carrefours sont réaménagés périodiquement.

## Revendications

1. Procédé de guidage d'un véhicule routier, reposant sur la détermination de la position instantanée du véhicule, sur le choix d'une destination (8) dans une liste stockée en mémoire sur la comparaison de la position du véhicule à un ensemble de noeuds routiers (10) regroupés dans un plan de circulation, sur l'optimisation d'un itinéraire conduisant noeud par noeud à la destination choisie, et sur l'indication en temps réel de la direction signalée à suivre pour respecter cet itinéraire, caractérisé en ce que l'itinéraire optimisé est constitué par le chemin le plus court conduisant du noeud (10) le plus proche de la position du véhicule, à un noeud (10B) de la destination (8) choisie, et en ce que le conducteur est averti de la direction signalée sur les panneaux routiers, et du nom du lieu à suivre à partir de chaque noeud.

2. Procédé selon la revendication 1, caractérisé en ce que l'initialisation du guidage est assurée par le choix d'une destination (8), dans la liste en mémoire, et par la détermination du noeud (10A) le plus proche de la position initiale P du véhicule, de façon à pouvoir guider le conducteur jusqu'à ce premier noeud (10A), au moyen d'une flèche d'orientation, indiquant sa direction à vol d'oiseau.

3. Procédé selon les revendications 1 ou 2, caractérisé en ce que la liste des destinations (8) regroupe des agglomérations, des lieux et des sites remarquables, et en ce que le plan de circulation comporte l'ensemble des noeuds (10) sélectionnés, et des branches (9) les reliant.

4. Dispositif de guidage de véhicule routier pour la mise en oeuvre d'un procédé conforme à la revendication 1, 2 ou 3, caractérisé en ce qu'il comporte un système de localisation (5) permettant de déterminer la position instantanée du véhicule, une mémoire de masse (4), regroupant le plan de circulation et la liste des destinations (8), et un calculateur (1), assurant la détermination du noeud (10) le plus proche de la position instantanée du véhicule, l'optimisation de l'itinéraire, l'indication de la direction à suivre, la direction signalée sur les panneaux routiers et le nom du lieu à suivre à partir de chaque noeud.

5. Dispositif selon la revendication 4, caractérisé en ce que le conducteur dispose d'un dispositif (2) de sélection des destinations (8) et d'un bouton d'interrogation (3).

6. Dispositif selon la revendication 4 ou 5, caractérisé en ce que les directions à suivre sont indiquées au conducteur à l'aide d'un afficheur alpha-numérique (7) et/ou d'un système de visualisation tête haute et/ou d'un système de synthèse de la parole (6).

7. Dispositif selon les revendications 4, 5 ou 6, caractérisé en ce que chaque branche (9) du plan de circulation est affecté de sa nomenclature routière, de numéros correspondant respectivement à son noeud d'origine et à son noeud d'extrémité, de sa longueur, des directions signalées dans ses deux sens de circulation par des panneaux, et de ses restrictions éventuelles de circulation.

8. Dispositif selon l'une des revendications 4 à 7, caractérisé en ce que chaque noeud (10) du plan de circulation est affecté de ses coordonnées géographiques, de la liste des branches (9) qui aboutissent à ce noeud (10), d'un tableau de communication entre ces différentes branches (9), et d'une variable indiquant si le noeud (10) appartient à la liste des destinations, et dans ce cas, à laquelle il correspond.

## Patentansprüche

1. Verfahren zur Führung eines Straßenfahrzeugs, das auf der Bestimmung des momentanen Standorts des Fahrzeugs, auf der Auswahl eines Zieles (8) aus einer in einem Speicher enthaltene Liste, auf dem Vergleich des Standortes des Fahrzeugs mit einer Anordnung von Straßenknoten (10), die in einem Verkehrswegeplan verteilt sind, auf der Optimierung eines Leitweges, der von Knoten zu Knoten zum Ziel führung und auf der Anzeige in Echtzeit der zu folgenden Richtung zur Einhaltung des Leitweges beruht, dadurch gekennzeichnet, dass der optmierte Leitweg durch den kürzesten Weg gebildet wird, der von dem dem Standort des Fahrzeugs nächstliegenden Knoten (10) zu einem Knoten (10B) des ausgewählten Zieles (8) führt und dass dem Fahrer die auf Straßenschildern angezeigte Richtung und der Name des anzusteuerenden Ortes ab einem jedem Knoten mitgeteilt wird.

2. Verfahren nach Anspruch 1, dadurch gekennzeichnet, dass der Beginn der Führung ausgelöst wird durch die Auswahl eines Zieles (8) in der im Speicher enthaltenen Liste und durch die Bestimmung des zum Anfangsstandort (P) des Fahrzeugs nächstliegenden Knotens (10A), dergestalt, dass der Fahrer bis zum ersten Knoten (10A) mittels einer Orientierungspfeilanzeige geführt wird, welche der Vogelflugrichtung entspricht.

3. Verfahren nach Ansprüchen 1 oder 2, dadurch gekennzeichnet, dass die Liste der Ziele (8) Siedlungen, Orte und herausragende Baulichkeiten umfaßt und dass der Verkehrswegeplan die Gesamtheit der ausgewählten Knoten (10) und der sie verbindenden Verbindungen (9) umfaßt.

4. Vorrichtung zur Führung eines Straßenfahrzeugs unter Verwendung eines Verfahrens nach Ansprüchen 1, 2 oder 3, dadurch gekennzeichnet, dass sie ein Ortungssystem (5) aufweist, welches die Feststellung des momentanen Standorts des Fahrzeugs ermöglicht, einen Massenspeicher (4) aufweist, welcher den Verkehrswegeplan und die Liste der Ziele (8) enthält sowie einen Rechner (1) aufweist, der die Bestimmung des zum momentanen Standort des Fahrzeugs nächstliegenden Knoten (10) ermöglicht, die Optimierung des Leitweges, die Anzeige der einzuschlagenden Richtung, die von Straßenschildern angezeigte Richtung und den Namen des anzusteuerenden Ortes ausgehend von jedem Knoten.

5. Vorrichtung nach Anspruch 4, dadurch gekennzeichnet, dass der Fahrer über eine Vorrichtung (2) zur Auswahl der Ziele (8) und über einen Frageschalter (3) verfügt.

6. Vorrichtung nach Ansprüchen 4 oder 5, dadurch gekennzeichnet, dass die zu folgenden Richtungen dem Fahrer mittels einer alpha-numerischen Anzeige (7) und/oder eines optischen Anzeigesystems auf Höhe des Kopfes und/oder eines Sprachsythesesystems (6) übermittelt werden.

7. Vorrichtung nach Ansprüchen 4, 5 oder 6, dadurch gekennzeichnet, dass jeder Verbindung (9) des Verkehrswegplanes seine Straßenbezeichnung, die den entsprechenden Ausgangs- und Endknoten zugeordneten Bezeichnungen ihre Länge, die in beiden Verkehrsrichtungen durch die Verkehrsschilder angezeigten Richtungen und eventuelle Verkehrsbeschränkungen zugeordnet sind.

8. Vorrichtung nach einem der Ansprüche 4 bis 7, dadurch gekennzeichnet, dass jedem Knoten (10) des Verkehrswegeplanes seine geographischen Koordinaten, die Liste der Verbindungen (9), die zu diesen Knoten führen, eine Verbindungstabelle zwischen den verschiedenen Verbindungen (9) und eine Variable, die anzeigt, ob der Knoten (10) zur Liste der Ziele gehört und gegebenenfalls zu welchem er gehört, zugeordnet ist.

## Claims

1. A method of guiding a road vehicle which is based on determining the instantaneous position of the vehicle, the choice of a destination (8) from a list stored in a memory, comparison of the position of the vehicle to an assembly of road junctions (10) contained in a traffic map, optimisation of an itinerary leading junction by junction to the selected destination, and real-time indication of the signed direction to be followed to follow that itinerary, characterised in that the optimised itinerary is constituted by the shortest route leading from the junction (10) closest to the position of the vehicle to a junction (10B) of the selected destination (8) and that the driver is warned of the direction signed by road signs and the name of the place to be followed from each junction.

2. A method according to claim 1 characterised in that initialisation of the guidance operation is effected by the choice of a destination (8) from the list stored in the memory and by determining the junction (10A) closest to the initial position P of the vehicle so as to be able to guide the driver to said first junction (10A) by means of an orientation arrow indicating the direction thereof as the crow flies.

3. A method according to claim 1 or claim 2 characterised in that the list of destinations (8) contains built-up areas, places and prominent sites, and that the traffic map comprises all of the junctions (10) selected and legs (9) joining them.

4. Apparatus for guiding a road vehicle for carrying out a method according to claim 1, claim 2 or claim 3 characterised in that it comprises a positioning system (5) for determining the instantaneous position of the vehicle, a mass memory (4) for containing the traffic map and the list of destinations (8) and a computer (1) for providing for determining the junction (10) closest to the instantaneous position of the vehicle, optimisation of the itinerary, the indication of the direction to be followed, the direction signed by road signs and the name of the place to be followed from each junction.

5. Apparatus according to claim 4 characterised in that the driver has a device (2) for selecting destinations (8) and an interrogation button (3).

6. Apparatus according to claim 4 or claim 5 characterised in that the directions to be followed are indicated to the driver by means of an alphanumeric display (7) and/or a head-up display system and/or a speech synthesis system (6).

7. Apparatus according to claim 4, claim 5 or claim 6 characterised in that each leg (9) of the traffic map is attributed with its road name, numbers corresponding respectively to its starting junction and its end junction, its length, directions signed in the two directions of traffic movement thereon by road signs, and possible traffic restrictions in respect thereof.

8. Apparatus according to one of claims 4 to characterised in that each junction (10) of the traffic map is attributed with its geographical co-ordinates, the list of the legs (9) which lead to said junction (10), a table for communication between said different legs (9) and a variable indicating if the junction (10) belongs to the list of destinations and in that case, to which one it corresponds.
